# EUROPEAN PATENT SPECIFICATION

(11) **EP 3 686 829 B1**
(45) Date of publication and mention of the grant of the patent: **26.03.2025**
(21) Application number: 18882248.0
(22) Date of filing: 23.11.2018
(51) Int. Cl.: G06Q 20/38

(54) **DEVICE CONTROL METHOD, AND RELATED DEVICE FOR SAME**
VORRICHTUNGSSTEUERUNGSVERFAHREN UND ZUGEHÖRIGES VERFAHREN DAFÜR
PROCÉDÉ DE COMMANDE DE DISPOSITIF, ET SON DISPOSITIF ASSOCIÉ

(30) Priority: 27.11.2017 CN 201711209715
(43) Date of publication of application: 29.07.2020
(73) Proprietor: Huawei Technologies Co., Ltd., Longgang District Shenzhen, Guangdong 518129 (CN)
(72) Inventor: MEI, Jingqing, Shenzhen Guangdong 518129 (CN)
(74) Representative: Grünecker Patent- und Rechtsanwälte PartG mbB
(86) International application number: PCT/CN2018/117122
(87) International publication number: WO 2019/101156

(56) References cited:
- WO-A2-2009/070430
- CN-A- 105 678 182
- CN-A- 106 339 875
- CN-A- 106 534 160
- CN-A- 107 360 001
- US-A1- 2019 036 712
- AAFAF OUADDAH ET AL: "FairAccess: a new Blockchain-based access control framework for the Internet of Things : FairAccess: a new access control framework for IoT", SECURITY AND COMMUNICATION NETWORKS, vol. 9, no. 18, 1 December 2016 (2016-12-01), pages 5943 - 5964, XP055415302, ISSN: 1939-0114, DOI: 10.1002/sec.1748
- DI FRANCESCO MAESA DAMIANO ET AL: "Blockchain Based Access Control", 24 May 2017, BIG DATA ANALYTICS IN THE SOCIAL AND UBIQUITOUS CONTEXT : 5TH INTERNATIONAL WORKSHOP ON MODELING SOCIAL MEDIA, MSM 2014, 5TH INTERNATIONAL WORKSHOP ON MINING UBIQUITOUS AND SOCIAL ENVIRONMENTS, MUSE 2014 AND FIRST INTERNATIONAL WORKSHOP ON MACHINE LE, ISBN: 978-3-642-17318-9, XP047416277

## Description

### TECHNICAL FIELD

This application relates to the communications field, and in particular, to a device control method and a related device.

### BACKGROUND

An Internet of things (the internet of things, IOT) is an Internet in which objects are interconnected. The Internet of things is developed based on the Internet. A user terminal is extended to any object, and information exchange and communication are performed between objects. With development of information and communications technologies, great importance is attached to development and prospects of the Internet of things by society. Many technologies of a basic Internet of things have entered human life, such as smart household and smart traffic. The smart household technology may be used to control a household appliance when a user is taking part in an outdoor activity, meeting a user requirement and improving user experience.

Control over a target device by a user may be implemented by using a blockchain-based bitcoin technology. First, an authorization server generates a transaction. The transaction describes granting of target device control permission to the user, and an address corresponding to a public key of the user is filled in for a first participant. If the target device finishes verifying the permission of the user and the verification succeeds, a payee address of the user in a first transaction may be recorded, and the payee address corresponds to the public key of the user. When the user manages the target device, each management instruction is signed by using a private key corresponding to the public key, and the target device may verify whether the private key matches the recorded public key, namely, the payee address of the user. If the private key matches the recorded public key, the management instruction is executed. If the private key does not match the recorded public key, the management instruction is not executed. In a behavior of bitcoin payment through transfer, a blockchain can effectively prevent tampering and record all valid transactions in the blockchain, ensuring immutability of transactions. After a payer performs a behavior of bitcoin payment through transfer, a transfer service is acknowledged and cannot be revoked.

Bitcoin is essentially a behavior of payment through transfer. Once the payer pays and payment is acknowledged, a transaction cannot be revoked. Therefore, during control over the target device by the user by using the blockchain-based bitcoin service technology, when it is found later that the transaction needs to be canceled, that is, control over the target device by the user needs to be canceled, the transaction cannot be revoked, resulting in a failure to revoke control over the target device by the user.

AAFAF OUADDAH ET AL, "FairAccess: a new Blockchain-based access control framework for the Internet of Things", SECURITY AND COMMUNICATION NETWORKS, February 19, 2017, vol. 9, no. 18, pages 5943 - 5964, describes a framework for access control in IoT based on blockchain technology.

### SUMMARY

Embodiments of this application provide a device control method and a related device, so that a target device rejects, based on second transaction information including second data, control by a first participant.

A first aspect of this application provides a device control method according to independent claim 1. Further embodiments are defined in the dependent claims.

A second aspect of this application provides a target device according to independent claim 4. Further embodiments are defined in the dependent claims.

A third aspect of the embodiments of this application provides a computer-readable storage medium according to claim 7.

An fourth aspect of the embodiments of this application provides a computer program according to claim 8.

Embodiments and examples not falling within the scope of the claims are not to be considered part of the invention and are included for illustrative purposes only.

### BRIEF DESCRIPTION OF DRAWINGS

FIG. 1 is a schematic diagram of an embodiment of a device control method according to this application;
FIG. 2 is a data structure diagram of transaction information;
FIG. 3 is a schematic diagram of another embodiment of a device control method according to this application;
FIG. 4 is a schematic diagram of another embodiment of a device control method according to this application;
FIG. 5 is a schematic diagram of another embodiment of a device control method according to this application;
FIG. 6A and FIG. 6B are a schematic diagram of another embodiment of a device control method according to this application;
FIG. 7 is a schematic diagram of another embodiment of a device control method according to this application;
FIG. 8 is a schematic diagram of another embodiment of a device control method according to this application;
FIG. 9 is a schematic diagram of an embodiment of a server according to this application;
FIG. 10 is a schematic diagram of another embodiment of a server according to this application;
FIG. 11 is a schematic diagram of an embodiment of a target device according to this application;
FIG. 12 is a schematic diagram of another embodiment of a target device according to this application;
FIG. 13 is a schematic diagram of another embodiment of a target device according to this application;
FIG. 14 is a schematic diagram of another embodiment of a target device according to this application;
FIG. 15 is a schematic diagram of another embodiment of a server according to this application; and
FIG. 16 is a schematic diagram of another embodiment of a target device according to this application.

### DESCRIPTION OF EMBODIMENTS

Embodiments of this application provide a device control method and a related device, to reject, based on second transaction information related to first transaction information, control by a first participant.

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way are interchangeable in proper circumstances so that the embodiments of the present invention described herein can be implemented in other orders than the order illustrated or described herein. Moreover, the terms "include", "contain" and any other variants mean to cover the non-exclusive inclusion, for example, a process, method, system, product, or device that includes a list of steps or units is not necessarily limited to those units, but may include other units not expressly listed or inherent to such a process, method, system, product, or device.

In the embodiments, a target device is a target device with a management server. The management server may be a server used for authorization in the embodiments; or may be a server that belongs to a service party different from that of the server used for authorization, but has a partnership with the server used for authorization.

In the embodiments of this application, the target device is relative to the first participant, and the target device is a determined physical device.

This application is implemented based on a blockchain technology. Imitating a bitcoin service in a blockchain, control over the target device is simulated as bitcoin payment through transfer. However, a behavior of payment through transfer is irrevocable, that is, once a user has control permission on a device, the control permission cannot be revoked. Therefore, this application proposes a device control method, to implement revocation of the control permission of the user on the device. The embodiments of this application may be used in an Internet of things. The following provides descriptions with reference to specific examples.

In the embodiments, bitcoin payment through transfer is generally used as an example for description of application scenarios. It can be understood that revocation of control permission may not involve input and output of amounts of money in the embodiments. For example, payment through transfer indicates only a relationship between a payer of a second transaction and a payee of a first transaction.

### Application scenario 1: education industry

An Internet of things applied to the education industry can achieve integration of education resources. Specific education facilities, including books, experimental devices, school networks, related personnel, and the like, are all integrated to implement a unified and interconnected education network.

This application scenario is based on the blockchain technology. The blockchain is a private blockchain or an alliance blockchain. A field carrying authorization information is set in a data structure of the private blockchain or the alliance blockchain. A specific control manner is as follows: In an education system of a school, the foregoing resource information is integrated into an Internet device first. The device contains an introduction to school courses, an introduction to teachers, community activities, an introduction to books in a library, and the like. A student may use this device for course appointment, community registration, or the like. Certainly, another manner may alternatively be available. Specifically, a student uses a mobile phone, a computer, or another device to remotely control the Internet device to perform registration or make an appointment, or may communicate with the Internet device and access an education resource on the Internet device. Sometimes, the school implements some security measures to prevent resource leakage, for example, construction of a campus local area network. Only a device within a scope of this local area network can control the campus Internet device. Therefore, in the scenario of the embodiments of this application, a user mobile phone or the like first sends a first message to a server. Content of this message is "Please authorize the device to control the school Internet device." The server checks whether the device is within the scope of the campus local area network. If the device is within the scope of the campus local area network, the server grants permission X to the user mobile phone, and generates first transaction information. The transaction information includes a submitter, namely, an authorization requesting party: the user mobile phone; a first receiver, namely, a control object: the school Internet device, with a public key address of the school Internet device being filled in for the receiver; and a second receiver, which may be the server itself or a server-controllable target account, with a public key address of the second receiver being filled in for the receiver. A transfer transaction is used as an example. For example, A has CNY 100, and pays CNY 50 to a first payee B, and A receives CNY 50 as a second payee A'.

Then, the server sends the first transaction information to a blockchain to ensure immutability of a transaction. It can be understood that the first transaction information further includes much content of other aspects, such as authorization information, a HASH value of the transaction, input and output amounts of money, and a transaction ID. When the campus Internet device detects, in the blockchain, only the first transaction information carrying the authorization information, the campus Internet device accepts control over the campus Internet device by the user mobile phone. A user can remotely access a web page of the device, or use the mobile phone to remotely perform an operation that can be performed by using only the Internet device. When the user mobile phone disconnects from the campus local area network, the server revokes control over the campus Internet device by the user mobile phone. A revocation manner is to use second transaction information generated by the server-controllable target account with a private key of the second receiver, or second transaction information generated by the server with a private key of the second receiver, where the second transaction information carries the private key of the second payee. A target device can learn from a private key-based signature that the second transaction information is initiated by a second participant. Following the foregoing transfer transaction, with bitcoin payment through transfer being used as an example, a second transaction is that, for example, A' is a payer, C is a payee, and CNY 50 is paid to C. The server sends the second transaction information to the blockchain. When the school Internet device obtains the second transaction information from the blockchain, the school Internet device may learn that the server has revoked control permission of the user mobile phone on the school Internet device, and therefore rejects control by the user mobile phone.

In this application scenario, the server determines whether to grant authorization based on a criterion of whether the user mobile phone exists within the scope of the campus local area network. It can be understood that, in different application scenarios, there are different criteria for the server to determine whether to grant authorization, and a criterion for determining whether to grant authorization may alternatively not be determined based on an application scenario. For example, the server stores an identifier of an authorization requesting party that is allowed to be authorized. When the server detects that an authorization requesting party has this identifier, the authorization requesting party may be authorized.

In this application scenario, a manner in which the school Internet device obtains the first transaction information and the second transaction information from the blockchain may be as follows.
(1) Manner 1: Because the server first generates the first transaction information and sends the first transaction information to the blockchain, the school Internet device first obtains the first transaction information, and checks whether the second transaction information exists. If the second transaction information exists, the school Internet device rejects, based on the second transaction information, control by the user mobile phone.
(2) Manner 2: After obtaining the first transaction information, the school Internet device detects no second transaction information in the blockchain. The school Internet device accepts control by the user mobile phone, and periodically checks whether the second transaction information exists in the blockchain. If the second transaction information exists, the school Internet device rejects, based on the second transaction information, control by the user mobile phone.

### Application scenario 2: smart household

In this application scenario, a user uses a portable smart device to remotely control a household appliance. This application scenario is based on a blockchain bitcoin technology. The blockchain is a public blockchain. A difference from the first application scenario is that a field carrying an authorization instruction is not set in a data structure.

First, a user A may use a portable smart device to send a first message to a server. Content of the message is "Request to control an air conditioner A." The server detects that the smart device is a smart device whose public key address has been stored in advance, and therefore grants permission Y to the smart device, and generates first transaction information. Then, the server sends the first transaction information to a blockchain. When the air conditioner detects only the first transaction information in the blockchain, the air conditioner accepts control by the smart device. The user may perform a series of operations, such as "turn-on", "timing", "turn-off", and "temperature adjustment", on the air conditioner by using the smart device. A specific implementation manner may be that the smart device has an application program, and the user can use the application program to perform the foregoing operations.

When the server determines to revoke control permission of the smart device, the server generates second transaction information. A characteristic of the second transaction information is similar to that in the application scenario 1. The second transaction information includes a private key of a second participant in the first transaction information. It can be learned from a private key-based signature that the second transaction information is initiated by the second participant. When the air conditioner detects the second transaction information in the blockchain, the air conditioner may learn that the smart device does not have the control permission, and therefore rejects control by the smart device.

This application scenario is based on a public blockchain. Therefore, a manner in which the first transaction information carries authorization information may be indicated by using a received amount of money. For example, if the server grants permission 1 to the user mobile phone, a corresponding amount of money is 0.00000001 BTC.

Likewise, in this application scenario, a manner in which the air conditioner A obtains the first transaction information and the second transaction information from the blockchain may be as follows.
(1) Manner 1: Because the server first generates the first transaction information and sends the first transaction information to the blockchain, the air conditioner A first obtains the first transaction information, and checks whether the second transaction information exists. If the second transaction information exists, the air conditioner A rejects, based on the second transaction information, control by the smart device.
(2) Manner 2: After obtaining the first transaction information, the air conditioner A detects no second transaction information in the blockchain. The air conditioner A accepts control by the smart device, and then periodically checks whether the second transaction information exists in the blockchain. If the second transaction information exists in the blockchain, the air conditioner A rejects, based on the second transaction information, control by the smart device.

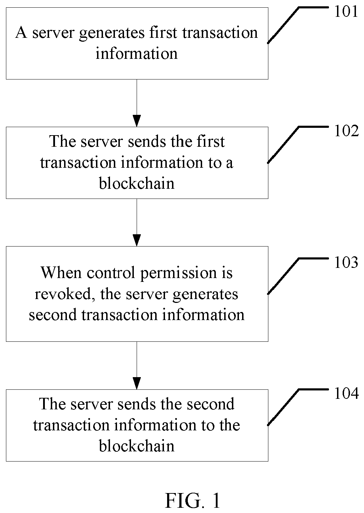

The following describes in detail the device control method in the embodiments of this application. Referring to FIG. 1, an embodiment of a device control method according to the embodiments of this application includes the following steps.

101. A server generates first transaction information.

After receiving a first message, the server determines to authorize a first participant to control a target device. A specific manner of indicating authorization by the server is generating the first transaction information.

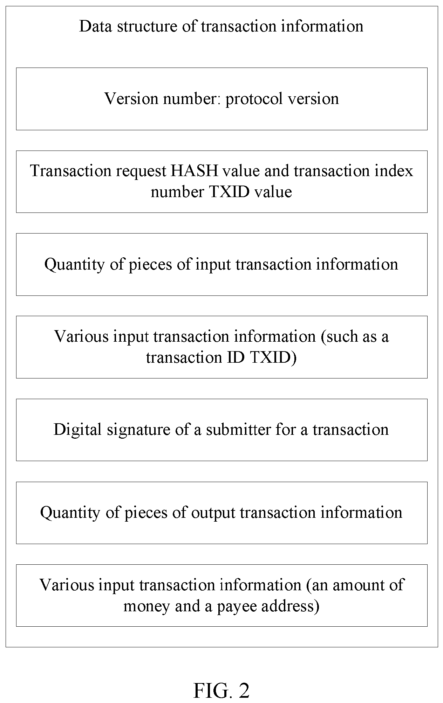

In this embodiment, a data structure of a piece of transaction information is shown in FIG. 2 and includes:
a version number: a protocol version;
information about various input data and output data, and quantities of pieces of input and output transaction information;
a transaction request HASH value: used to prevent a transaction from being tampered with; in a blockchain technology, immutability of a transaction is guaranteed from two aspects, a HASH algorithm is a major technical means of the two aspects, and a HASH value is a value obtained after data is calculated by using the HASH algorithm; and
a digital signature of a submitter for this transaction, for example, the server uses a private key to sign a first transaction, and the target device may determine, based on the signature, that the transaction is initiated by the server.

It can be understood that the data structure of the transaction information shown in the figure is only some constituent parts of the transaction information. A piece of transaction information may further include more constituent parts than those shown in the figure.

In this embodiment, the target device may learn, based on the first transaction information, that the first participant has obtained control permission. A specific implementation manner may be that the first transaction information carries authorization information.

In this embodiment, the first transaction information includes information about the first participant and first data that includes information about a second participant. The first participant is user equipment, and the second participant may be the server itself, or may be a server-controllable target account, or may be another device or user. The second participant has a private key. This is not specifically limited herein.

A possible case is that when the second participant is the another device or user, a manner in which the server generates second transaction information may be that the server has the private key of the second participant, and it may be learned, based on the private key, that a second transaction is submitted by the second participant (the another device and user)

Another possible case is that the server instructs another device corresponding to the controllable target account, to use the private key of the second participant to generate the second transaction information.

In this embodiment, in addition to the information about the first participant and the information about the second participant, the first transaction information may further include information about a third participant or even information about more participants. A quantity of participants whose information is included is not limited herein, provided that at least the information about the first participant and the information about the second participant are included, that is, information about at least two participants needs to be included.

In this embodiment, the server fills in, for a first payee (the first participant) in the first transaction information, an address corresponding to a public key of the first payee. A manner in which the server obtains the address may be that the address is carried in the first message and sent to the server together with the first message, or may be that the address is stored in the server in advance. This is not specifically limited herein.

In this embodiment, when the user equipment requests, after obtaining the control permission, to manage the target device, the user equipment submits a transaction ID of the first transaction, a challenge value signed by using a private key, and a public key. The challenge value is provided to prove that the first participant actually has a private key, and therefore a temporarily given random number can be encrypted. After obtaining the first transaction information from a blockchain, the target device needs to determine that: 1. the public key address of the first payee (the first participant) is consistent with the public key provided by the first participant; 2. a submitter of the first transaction information is a valid server; and 3. no second transaction information exists. If all the three points are met, the target device accepts control by the first participant.

In this embodiment, data encrypted by using a private key may be decrypted by using a public key. Therefore, the first participant corresponds to the public key address of the user equipment, and the second participant corresponds to a public key address of an associated account of the authorization server or a public key address of the authorization server. Both the first participant and the second participant have their respective private keys. After obtaining the first transaction information, the target device obtains the public keys of the first participant and the second participant, and can decrypt different private keys by using the corresponding public keys, to authenticate identities of the first participant and the second participant.

In this embodiment, the first transaction information further includes first data information. The first data information includes the information about the second participant.

In this embodiment, the control permission is permission to control the target device.

102. The server sends the first transaction information to the blockchain.

After generating the first transaction information, the server sends and adds the transaction information to a block block, and then the block is added to the entire blockchain.

103. When the control permission is revoked, the server generates the second transaction information.

When the server itself determines to revoke the control permission, or the server receives a message sent by another device and then determines to revoke the control permission, the server generates the second transaction information. The second transaction information includes second data. There is a correspondence between the second data and the first data. In this embodiment, the correspondence between the second data and the first data is as follows: The first transaction information includes the transaction ID of the first transaction information, the information about the first participant, and the information about the second participant (for example, a public key address of the second participant), and the second transaction information includes the transaction ID of the first transaction information, a transaction ID of the second transaction information, and the private key of the second participant, where the private key is used to perform signature authentication to prove that the second transaction information is submitted by the second participant.

This embodiment is based on the blockchain technology. When this embodiment is applied to a behavior of bitcoin payment through transfer, a process is similar to that in this embodiment, but involves input and output of amounts of money. The following uses payment through transfer as an example to describe content of the second transaction information with reference to a specific application scenario.

Payment through transfer is used as an example. Content of the first transaction information is as follows: A has CNY 100, pays CNY 50 to B, and pays CNY 50 to A', where A' is A. The content of the second transaction information may be as follows: A payer A' has CNY 50, and pays CNY x to a payee C, where x is less than 50. The correspondence between the second data and the first data may be as follows: 1. the participant A' in the first transaction information and the participant A' in the second transaction information correspond to each other; 2. an amount of money in the first transaction information and an amount of money in the second transaction information correspond to each other; and 3. the second data includes a transaction source, that is, a transaction index number: the transaction ID TXID1 of the first transaction information. This embodiment is used for control authorization, but does not involve input and output of amounts of money. Therefore, the second transaction information needs to include only the private key of the second participant. Then, signature authentication is performed so that it is learned that the transaction information is initiated by the second participant.

104. The server sends the second transaction information to the blockchain.

After the server generates the second transaction information including the second data, where there is the correspondence between the second data and the first data in the first transaction information, the server sends the second transaction information to the blockchain. After the target device obtains the second transaction information from the blockchain, the target device learns, based on the second transaction information, that the server has canceled the control permission of the first participant on the target device. The target device rejects control over the target device by the first participant.

In this embodiment, the server generates the second transaction information including the second data, where there is a correspondence between the second transaction information and the first data in the first transaction information. Therefore, when obtaining the second transaction information from the blockchain, the target device determines that the control permission has been revoked, and therefore rejects control over the target device by the first participant. In this way, when a blockchain-based technology is applied to an Internet of things, control permission of a user on a target device can be revoked based on a need.

In this embodiment, a reason why the target device can authorize, based on the first transaction information, the first participant to control the target device may be that the first transaction information carries the authorization information. In a blockchain, a manner of carrying authorization information varies according to blockchain type. When the blockchain is a private blockchain or an alliance blockchain, a field carrying authorization information is set in a data structure of the blockchain. The server needs to use only the field to describe the authorization information. Specifically, the authorization information is a digital certificate, and a formal HASH value is added to an optional field OP_RETURN of a transaction.

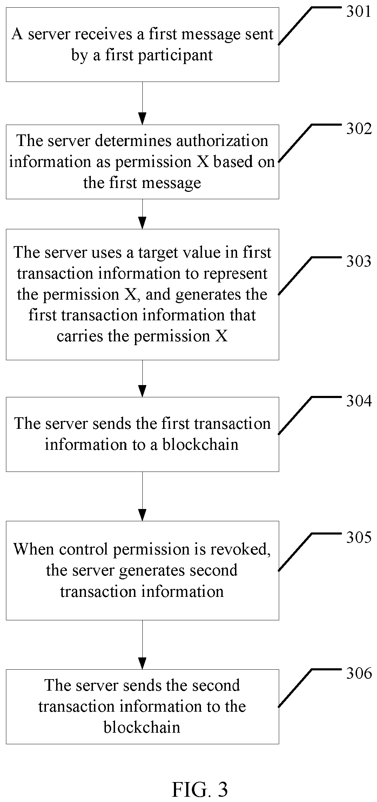

When the blockchain is a public blockchain, the authorization information may be carried in the first transaction information in a plurality of manners, for example, through a received amount of money in the first transaction information. Referring to FIG. 3, the following provides a description.

301. A server receives a first message sent by a first participant.

In this embodiment, the first message is used by the first participant to request control permission on a target device.

When a user needs to control the target device, the first message is generated by using a portable smart terminal of the user, and is sent to the server for processing. After receiving the first message, the server parses data and an instruction that are carried in the first message, and learns that the user is requesting the control permission on the target device. The server determines whether to authorize the user to control the target device.

**In** this embodiment, the first participant is a party that requests to obtain the control permission on the target device. In an Internet of things, a first participant is generally a specific terminal device.

In this embodiment, content of the first message may be specifically "Please authorize the first participant to control the target device."

In this embodiment, a manner in which the first participant sends the first message to the server may be that instruction information is sent by using a smart device of the first participant, or may be that the first participant directly configures the server. This is not specifically limited herein.

302. The server determines authorization information as permission X based on the first message.

In this embodiment, after determining to authorize the first participant to control the target device, the server determines the authorization information as the permission X.

303. The server uses a target value in first transaction information to represent the permission X, and generates the first transaction information that carries the permission X.

In this embodiment, bitcoin is used as an example. A smallest unit of bitcoin is one Satoshi, corresponding to one hundred millionth of a bitcoin. A manner in which the server uses the target value in the first transaction information to represent the permission X may be as follows.
(1) A received amount of money of the first participant is used for representation.
   For example, if the control permission is permission 5, the received amount of money of the first participant is 0.00000005 BTC.
(2) A received amount of money of a second participant is used for representation.
   For example, if the control permission is permission 10, the received amount of money of the second participant is 0.0000001 BTC.
(3) Received amounts of money of the first participant and the second participant are used for representation.
   For example, if the control permission is permission 5, a sum of received amounts of money of the first participant and the second participant is 0.0000005 BTC.
(4) In this embodiment, when third transaction information further includes a third participant, a fourth participant,... and an N^{th} participant, the control permission may alternatively be represented by using a sum of amounts of money of at least two payees in the first to N^{th} payees. This is not specifically limited herein.

304. The server sends the first transaction information to a blockchain.

305. When the control permission is revoked, the server generates second transaction information.

306. The server sends the second transaction information to the blockchain.

In this embodiment, embodiment steps 304, 305, and 306 are similar to embodiment steps 102, 103, and 104 shown in FIG. 1. Details are not described herein again.

In this embodiment, because the blockchain is a public blockchain, the received amount of money of the payee (participant) carries the authorization information in this embodiment, properly using a field in the first transaction information, and improving practical applicability of solution implementation.

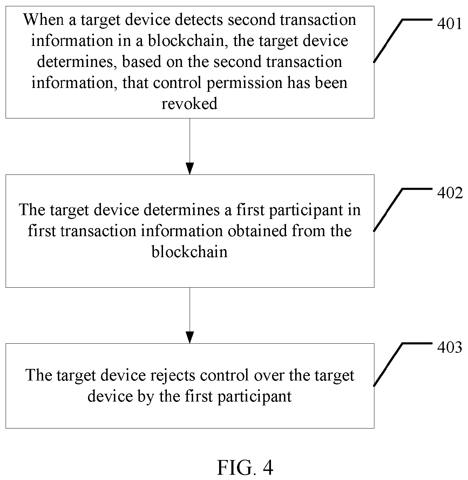

The foregoing describes the device control method in the embodiments of this application from a perspective of the server. Referring to FIG. 4, the following describes a device control method in the embodiments of this application from a perspective of a target device.

401. When a target device detects second transaction information in a blockchain, the target device determines, based on the second transaction information, that control permission has been revoked.

When the target device detects that the second transaction information exists in the blockchain, the target device can determine, based on the second transaction information, that control permission of a first participant has been revoked.

In this embodiment, a reason why the target device can determine, based on the second transaction information, that the control permission of the first participant has been revoked is that the second transaction information includes second data, and there is a correspondence between the second data and first data in first transaction information. The correspondence is similar to that in embodiment step 103, and details are not described herein again. The first transaction information may be generated when a server determines, after receiving a first message sent by the first participant, to authorize the first participant to control the target device. Therefore, the target device can accept, based on a first transaction, control by the first participant. However, when the target device detects the second transaction information with the foregoing characteristic, the target device determines that the control permission has been revoked, and therefore rejects control by the first participant.

402. The target device determines the first participant in the first transaction information obtained from the blockchain.

After determining the second transaction information, the target device needs to further determine the first participant in the first transaction information. A reason is that when a plurality of participants are controlling the target device, the target device needs to determine whose control should be rejected.

In this embodiment, the first transaction information includes the first data, the first data includes information about a second participant, and the first transaction information further includes information about the first participant.

In this embodiment, the first transaction information includes the first data, the first data includes the information about the second participant, and the first transaction information further includes the information about the first participant. It can be understood that the first transaction information may further include information about a third participant or even information about more participants. A quantity of participants whose information is included is not limited herein, provided that at least the information about the first participant and the information about the second participant are included, that is, information about at least two participants needs to be included.

403. The target device rejects control over the target device by the first participant.

In this embodiment, when the first participant requests to control the target device or after the target device accepts control by the second participant, the target device can reject, based on the second transaction information, control by the first participant.

In this embodiment, when the target device detects the second transaction information in the blockchain, the target device determines the first participant in the first transaction information, and rejects control by the first participant. In this way, when a blockchain-based technology is applied to an Internet of things, control permission of a user on a target device can be revoked based on a need.

In this embodiment, the target device may detect the second transaction information when verifying the control permission after obtaining the first transaction information, or may detect the second transaction information after accepting control by the first participant. This is not specifically limited herein. The following describes the two cases.

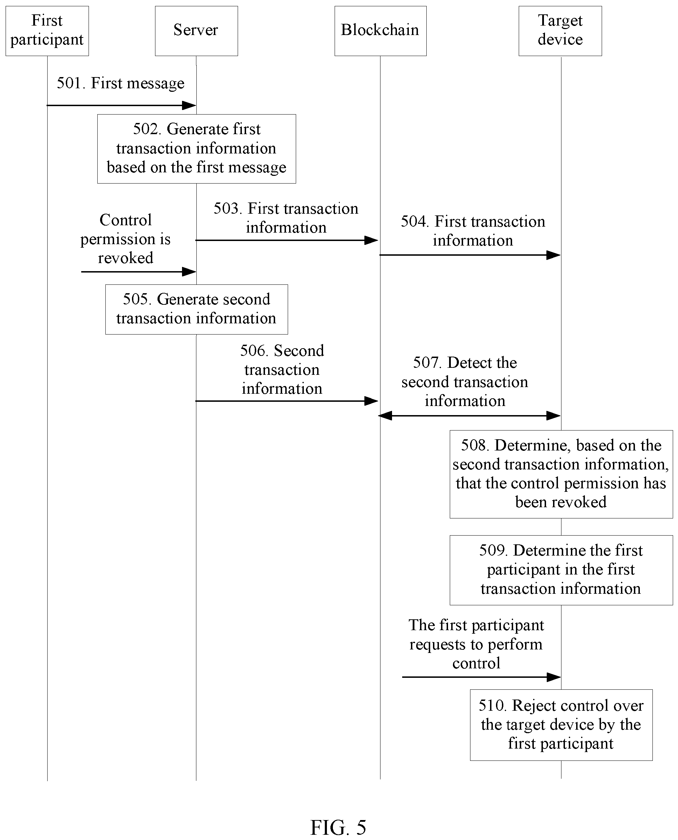

Case 1: The target device detects the second transaction information when verifying the control permission after obtaining the first transaction information. Referring to FIG. 5, the following provides a description.

501. A server receives a first message sent by a first participant.

In this embodiment, embodiment step 501 is similar to embodiment step 301 shown in FIG. 3. Details are not described herein again.

502. The server generates first transaction information based on the first message.

503. The server sends the first transaction information to a blockchain.

504. A target device obtains the first transaction information from the blockchain.

In this embodiment, after the server sends the first transaction information to the blockchain, the target device obtains the first transaction information.

505. When control permission is revoked, the server generates second transaction information.

506. The server sends the second transaction information to the blockchain.

In this embodiment, embodiment steps 502, 503, 505, and 506 are similar to embodiment steps 101, 102, 103, and 104 shown in FIG. 1. Details are not described herein again.

507. The target device detects the second transaction information in the blockchain.

In this embodiment, after obtaining the first transaction information, the target device verifies control permission of the first participant in the first transaction information. During the verification, the target device also needs to verify whether the second transaction information exists. If the second transaction information exists, the target device determines that the control permission has been revoked. In this case, the verification fails, and the target device rejects control by the first participant.

508. The target device determines, based on the second transaction information, that the control permission has been revoked.

509. The target device determines the first participant in the first transaction information.

510. The target device rejects control over the target device by the first participant.

In this embodiment, after the target device obtains the first transaction information from the blockchain and then detects the second transaction information in the blockchain, the target device rejects control by the first participant when the first participant requests to control the target device. This increases feasibility and diversity of solution implementation.

In this embodiment, embodiment steps 508, 509, and 510 are similar to embodiment steps 401, 402, and 403 shown in FIG. 4. Details are not described herein again.

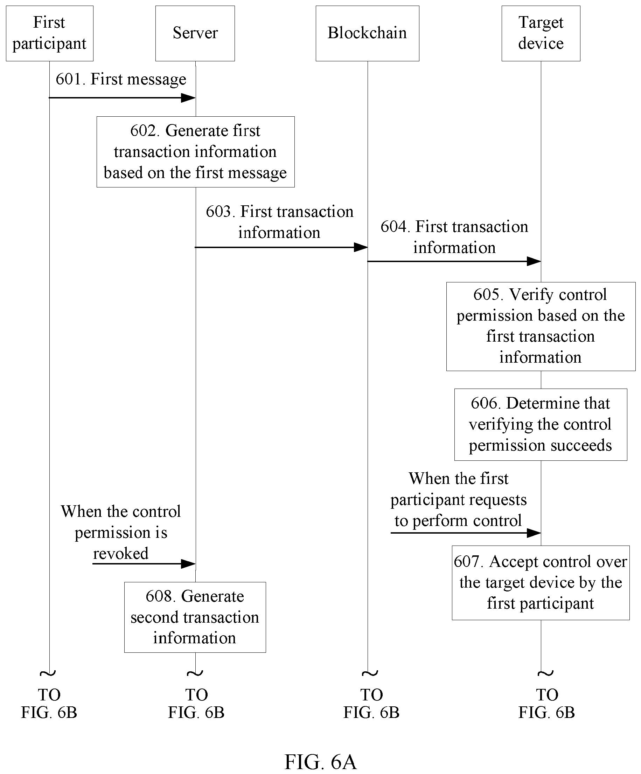

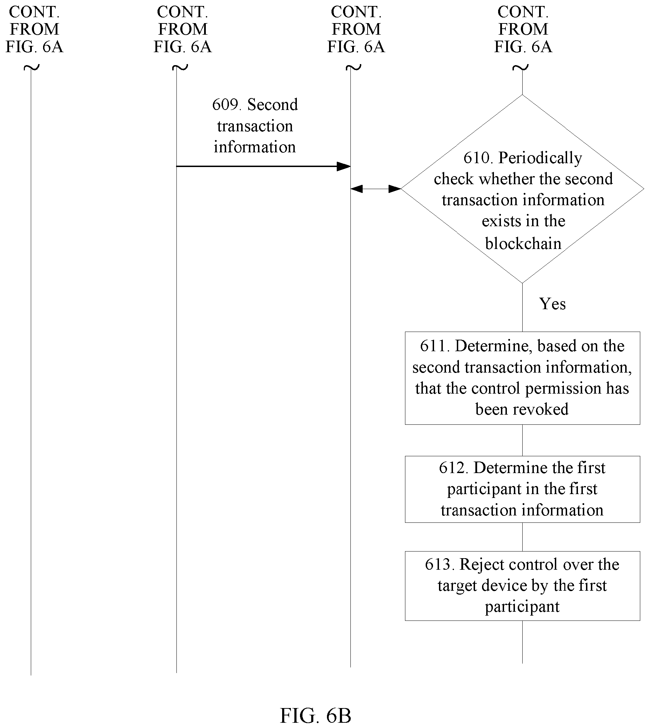

Case 2: The target device detects the second transaction information after accepting control by the first participant. Referring to FIG. 6A and FIG. 6B, the following provides a description.

601. A server receives a first message sent by a first participant.

602. The server generates first transaction information based on the first message.

603. The server sends the first transaction information to a blockchain.

In this embodiment, embodiment steps 601 to 603 are similar to embodiment steps 501 to 503 shown in FIG. 5. Details are not described herein again.

604. A target device obtains the first transaction information from the blockchain.

In this embodiment, after the server sends the first transaction information to the blockchain, the target device obtains the first transaction information.

605. The target device verifies control permission based on the first transaction information.

The target device verifies the control permission to mainly determine that: 1. a public key address of a first payee (the first participant) is consistent with a public key provided by the first participant; 2. a submitter of the first transaction information is a valid server; and 3. no second transaction information exists. If all the three points are met, the target device accepts control by the first participant.

606. The target device determines that verifying the control permission succeeds.

607. The target device accepts control over the target device by the first participant.

In this case, when the first participant requests to control the target device, the target device accepts control over the target device by the first participant.

608. When the control permission is revoked, the server generates second transaction information.

609. The server sends the second transaction information to the blockchain.

In this embodiment, embodiment steps 608 and 609 are similar to embodiment steps 503 and 504 shown in FIG. 5. Details are not described herein again.

610. The target device periodically checks whether the second transaction exists in the blockchain.

In this embodiment, after accepting control by the first participant, the target device periodically checks whether the second transaction information exists in the blockchain. A check period may be preset on the target device.

611. If the second transaction information exists in the blockchain, the target device determines, based on the second transaction information, that the control permission has been revoked.

If the second transaction information exists, the target device determines that the server has revoked the control permission of the first participant on the target device.

612. The target device determines the first participant in a first transaction.

613. The target device rejects control over the target device by the first participant.

In this embodiment, embodiment steps 612 and 613 are similar to embodiment steps 402 and 403 shown in FIG. 4. Details are not described herein again.

In this embodiment, the target device verifies the control permission in the first transaction information. When verifying the permission succeeds, the target device accepts control by the first participant. Then, the target device periodically checks whether the second transaction information exists. If the second transaction information exists, the target device rejects control by the first participant. This increases diversity of solution implementation.

Each piece of transaction information has a transaction ID. A plurality of pieces of transaction information may exist in the blockchain. A manner in which the target device obtains the first transaction information may be that the first participant submits a transaction ID of the first transaction to the target device, and the target device obtains the first transaction from the blockchain based on the ID; or may be that the target device obtains third transaction information submitted by the first participant, where there is a correspondence between the third transaction information and the first transaction information, and the target device determines an ID of the first transaction information based on the third transaction information, and then obtains the first transaction information. A latter manner is a one-time authorization manner because the third transaction information cannot be generated twice. The following describes each of the manners.

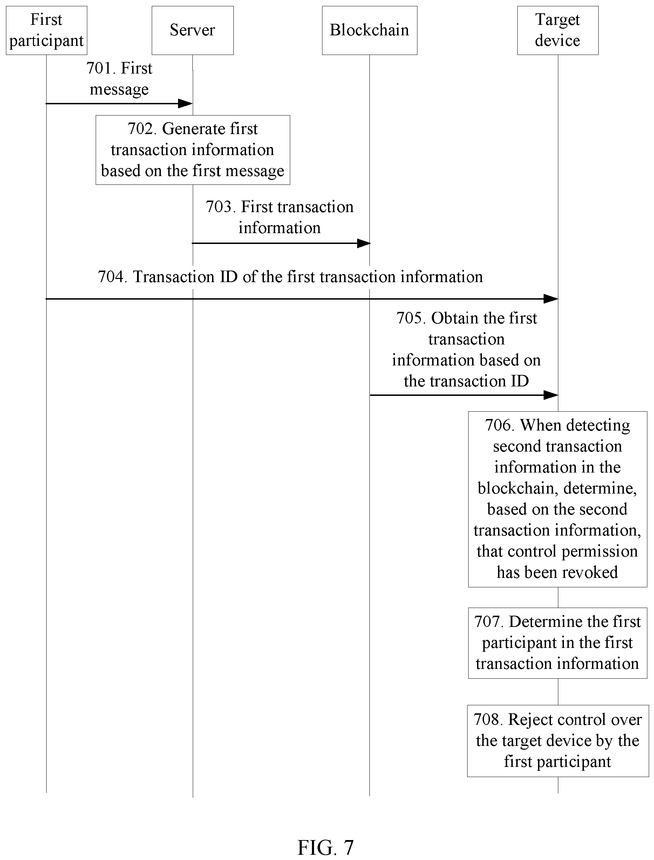

Manner 1: The target device obtains the ID of the first transaction sent by the first participant. Referring to FIG. 7, the following provides a description.

701. A server receives a first message sent by a first participant.

702. The server generates first transaction information based on the first message.

703. The server sends the first transaction information to a blockchain.

In this embodiment, embodiment steps 701, 702, and 703 are similar to embodiment steps 501, 502, and 503 shown in FIG. 5. Details are not described herein again.

704. A target device receives a transaction ID, of the first transaction information, sent by the first participant.

In this embodiment, the transaction ID may be used to indicate an address of the first transaction information in the blockchain, or may be a unique identifier of the first transaction information. The target device may obtain the first transaction information from the blockchain based on the identifier.

705. The target device obtains the first transaction information from the blockchain based on the transaction ID.

In this embodiment, after obtaining the transaction ID of the first transaction information, the target device obtains the first transaction information based on the transaction ID.

706. When the target device detects second transaction information in the blockchain, the target device determines, based on the second transaction information, that control permission has been revoked.

707. The target device determines the first participant in the first transaction information.

708. The target device rejects control over the target device by the first participant.

In this embodiment, embodiment steps 706 to 708 are similar to embodiment steps 401 to 403 shown in FIG. 4. Details are not described herein again.

In this embodiment, the first participant provides the transaction ID of the first transaction information to the target device, so that the target device can obtain the first transaction information from the blockchain. This increases feasibility of the solution.

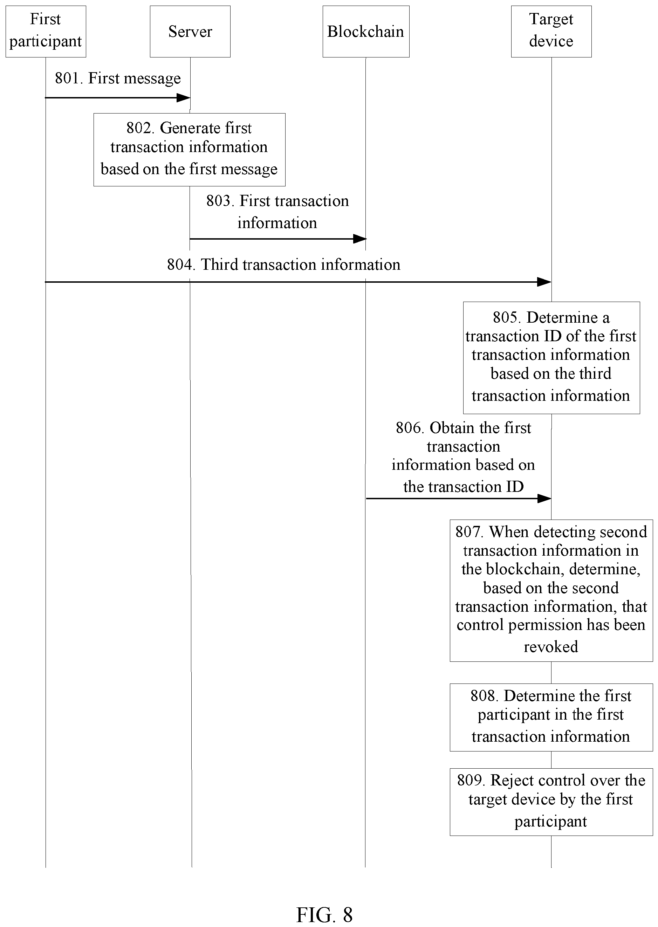

Manner 2: The target device obtains the third transaction information sent by the first participant. Referring to FIG. 8, the following provides a description.

801. A server receives a first message sent by a first participant.

802. The server generates first transaction information based on the first message.

803. The server sends the first transaction information to a blockchain.

In this embodiment, embodiment steps 801, 802, and 803 are similar to embodiment steps 501, 502, and 503 shown in FIG. 5. Details are not described herein again.

804. A target device obtains third transaction information sent by the first participant.

In this embodiment, the first participant generates the third transaction information. The third transaction information includes third data in the first transaction information. The third data corresponds to the first participant.

In this embodiment, the third data corresponds to the first participant. In other words, the third data includes a private key of the first participant. The private key can be used to perform signature authentication to learn that the third transaction information is initiated by the first participant. Therefore, the third transaction information further includes a transaction source, namely, a transaction ID of the first transaction information or a transaction index.

In this embodiment, the target device may directly obtain the third transaction information from the first participant; or the target device may obtain the third transaction information from the blockchain after the first participant sends the third transaction information to the blockchain. This is not specifically limited herein.

In this embodiment, the first transaction information is associated with both second transaction information and the third transaction information, but specific association content is different. The following provides a description with reference to a specific application scenario.

Payment through transfer is used as an example. Content of the first transaction information is as follows: A has CNY 100, pays CNY 70 to B, and pays CNY 30 to A', where A' is A. Content of the second transaction information is as follows: A payer A' with CNY 30 pays CNY x to C, where x is less than 30. Content of the third transaction information is as follows: A payer B with CNY 70 pays CNY y to D, where y is less than 70.

805. The target device determines the transaction ID of the first transaction information based on the third transaction information.

Because the transaction source of the third transaction information is the first transaction information, the target device can determine the transaction ID of the first transaction information based on the third transaction information.

806. The target device obtains the first transaction information from the blockchain based on the transaction ID.

807. When the target device detects the second transaction information in the blockchain, the target device determines, based on the second transaction information, that control permission has been revoked.

808. The target device determines the first participant in the first transaction information.

809. The target device rejects control over the target device by the first participant.

In this embodiment, embodiment steps 807 to 809 are similar to embodiment steps 401 to 403 shown in FIG. 4. Details are not described herein again.

In this embodiment, the target device obtains the third transaction information sent by the first participant, learns an address of the first transaction information based on the third transaction information, and obtains the first transaction information from the blockchain. This increases diversity of manners of obtaining the first transaction information.

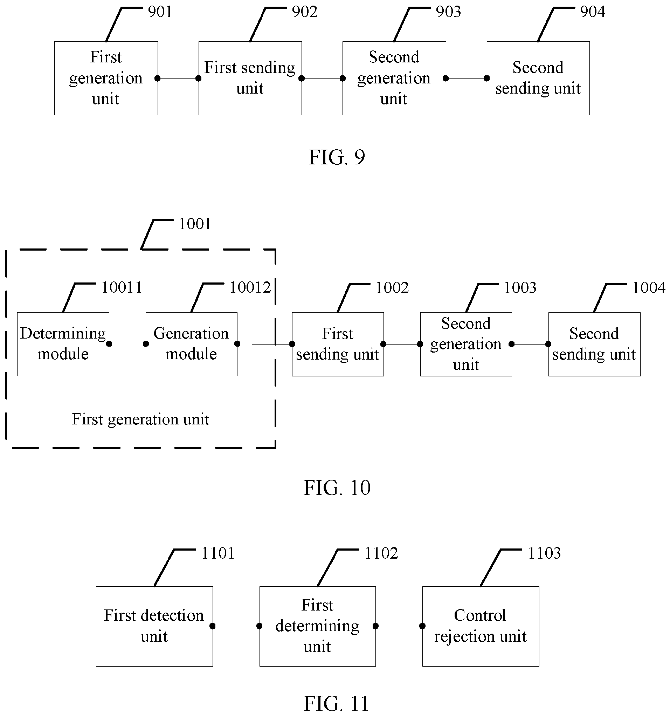

FIG. 1 and FIG. 3 to FIG. 8 describe the embodiments of this application from a perspective of the device control method. Referring to FIG. 9, the following describes embodiments of this application from a perspective of a server.

A first generation unit 901 is configured to generate first transaction information. The first transaction information is used to indicate that a first participant has obtained control permission. The first transaction information includes information about the first participant and first data that includes information about a second participant. The control permission is permission to control a target device.

A first sending unit 902 is configured to send the first transaction information to a blockchain.

A second generation unit 903 is configured to generate second transaction information when the control permission is revoked. The second transaction information includes second data, and there is a correspondence between the second data and the first data.

A second sending unit 904 is configured to send the second transaction information to the blockchain. The second transaction information is used to indicate that the control permission on the target device has been revoked. That the control permission has been revoked is used to instruct the target device to reject control over the target device by the first participant.

In this embodiment, the first generation unit 901 generates the first transaction information; the first sending unit 902 sends the first transaction information to the blockchain; the second generation unit 903 generates the second transaction information when the control permission is revoked; and the second sending unit 904 sends the second transaction information to the blockchain, so that the target device rejects, based on the second transaction information, control by the first participant. In this embodiment, the second transaction information is generated to overwrite the first transaction information, so as to revoke authorization and reject control by the first participant.

In this embodiment, the first transaction information may carry authorization information by using a received amount of money. Referring to FIG. 10, the following provides a description.

A first generation unit 1001 is configured to generate first transaction information. The first transaction information is used to indicate that a first participant has obtained control permission. The first transaction information includes information about the first participant and first data that includes information about a second participant. The control permission is permission to control a target device.

A first sending unit 1002 is configured to send the first transaction information to a blockchain.

A second generation unit 1003 is configured to generate second transaction information when the control permission is revoked. The second transaction information includes second data, and there is a correspondence between the second data and the first data.

A second sending unit 1004 is configured to send the second transaction information to the blockchain. The second transaction information is used to indicate that the control permission on the target device has been revoked. That the control permission has been revoked is used to instruct the target device to reject control over the target device by the first participant.

The first generation unit includes:
a determining module 10011, configured to determine authorization information as permission X based on the first message, where the authorization information corresponds to the control permission; and
a generation module 10012, configured to use a target value in the first transaction information to represent the permission X, and generate the first transaction information that carries the permission X.

In this embodiment, after the determining module 10021 determines the authorization information as the permission X, the generation module 10012 generates the first transaction information in which the target value is used to represent the permission X, effectively using a field resource of the first transaction information.

FIG. 9 and FIG. 10 describe the embodiments of this application from the perspective of the server. Referring to FIG. 11, the following describes embodiments of this application from a perspective of a target device.

A first detection unit 1101 is configured to: when detecting second transaction information in a blockchain, determine, based on the second transaction information, that control permission has been revoked. The second transaction information includes second data. There is a correspondence between the second data and first data that includes information about a second participant. The control permission is permission to control the target device.

A first determining unit 1102 is configured to determine a first participant in first transaction information obtained from the blockchain. The first transaction information includes the first data and information about the first participant. The first transaction information is used to indicate that the first participant has obtained the control permission. The first transaction information is generated by the server.

A control rejection unit 1103 is configured to reject control over the target device by the first participant.

In this embodiment, from the perspective of the target device, when detecting the second transaction information in the blockchain, the first detection unit 1101 learns that the server has canceled the control permission of the first participant on the target device; the first determining unit 1102 determines the first participant in the first transaction information; and then the control rejection unit 1103 rejects control over the target device by the first participant.

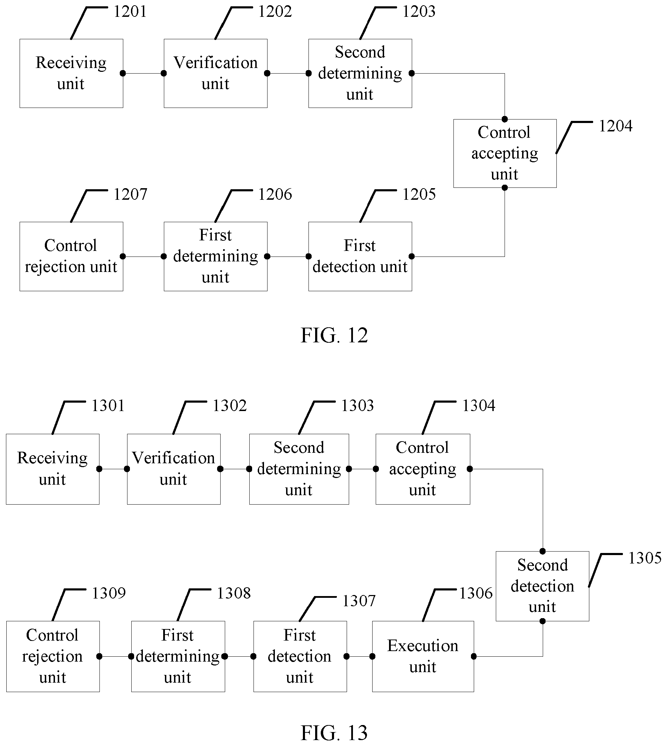

In this embodiment, the target device may detect the second transaction information after accepting control by the first participant. Referring to FIG. 12, the following provides a description.

A receiving unit 1201 is configured to receive, from the blockchain, the first transaction information sent by the server.

A verification unit 1202 is configured to verify the control permission based on the first transaction information.

A second determining unit 1203 is configured to determine that verifying the control permission succeeds.

A control accepting unit 1204 is configured to accept control over the target device by the first participant.

A first detection unit 1205 is configured to: when detecting second transaction information in the blockchain, determine, based on the second transaction information, that the control permission has been revoked, where the second transaction information includes second data, there is a correspondence between the second data and first data that includes information about a second participant, and the control permission is permission to control the target device. A first determining unit 1206 is configured to determine the first participant in the first transaction information obtained from the blockchain, where the first transaction information includes the first data and information about the first participant, the first transaction information is used to indicate that the first participant has obtained the control permission, and the first transaction information is generated by the server.

A control rejection unit 1207 is configured to reject control over the target device by the first participant.

In this embodiment, the target device first accepts control by the first participant, and then detects the second transaction information and rejects control by the first participant. This increases diversity of solution implementation.

In this embodiment, the target device may detect the second transaction information in the blockchain in a periodic check manner. Referring to FIG. 13, the following provides a description.

A receiving unit 1301 is configured to receive, from the blockchain, the first transaction information sent by the server.

A verification unit 1302 is configured to verify the control permission based on the first transaction information.

A second determining unit 1303 is configured to determine that verifying the control permission succeeds.

A control accepting unit 1304 is configured to accept control over the target device by the first participant.

A second detection unit 1305 is configured to periodically check whether the second transaction exists in the blockchain.

An execution unit 1306 is configured to: if the second transaction exists in the blockchain, perform a step to be performed when the second transaction information is detected.

A first detection unit 1307 is configured to: when detecting the second transaction information in the blockchain, determine, based on the second transaction information, that the control permission has been revoked. The second transaction information includes second data. There is a correspondence between the second data and first data that includes information about a second participant. The control permission is permission to control the target device.

A first determining unit 1308 is configured to determine the first participant in the first transaction information obtained from the blockchain. The first transaction information includes the first data and information about the first participant. The first transaction information is used to indicate that the first participant has obtained the control permission. The first transaction information is generated by the server.

A control rejection unit 1309 is configured to reject control over the target device by the first participant.

In this embodiment, after accepting control by the first participant, the target device rejects control by the first participant when detecting the second transaction information through a periodic check. This increases diversity of solution implementation.

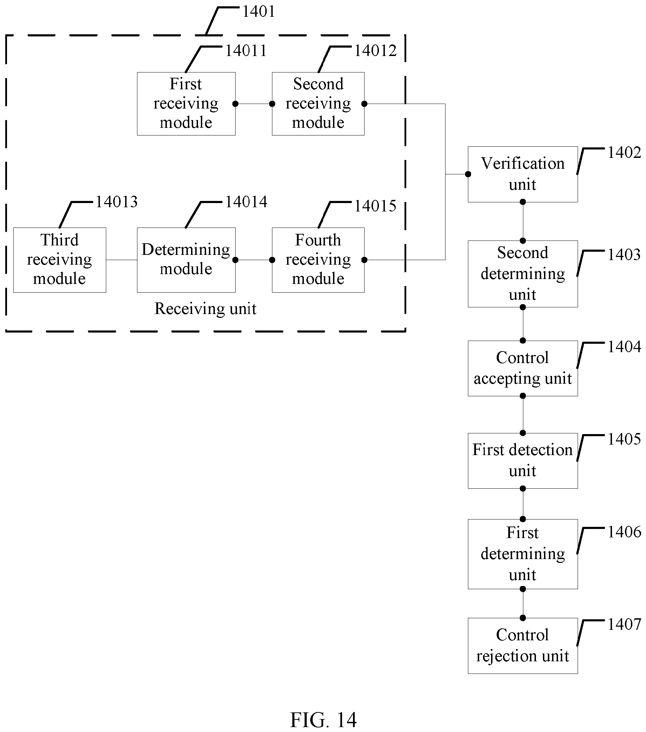

In this embodiment, there are a plurality of manners in which the target device obtains the first transaction information from the blockchain. Referring to FIG. 14, the following provides a description.

A receiving unit 1401 is configured to receive, from the blockchain, the first transaction information sent by the server.

A verification unit 1402 is configured to verify the control permission based on the first transaction information.

A second determining unit 1403 is configured to determine that verifying the control permission succeeds.

A control accepting unit 1404 is configured to accept control over the target device by the first participant.

A first detection unit 1405 is configured to: when detecting second transaction information in the blockchain, determine, based on the second transaction information, that the control permission has been revoked. The second transaction information includes second data. There is a correspondence between the second data and first data that includes information about a second participant. The control permission is permission to control the target device.

A first determining unit 1406 is configured to determine the first participant in the first transaction information obtained from the blockchain. The first transaction information includes the first data and information about the first participant. The first transaction information is used to indicate that the first participant has obtained the control permission. The first transaction information is generated by the server.

A control rejection unit 1407 is configured to reject control over the target device by the first participant.

The receiving unit includes:
a first receiving module 14011, configured to receive a transaction ID, of the first transaction information, sent by the first participant; and
a second receiving module 14012, configured to receive, from the blockchain based on the transaction ID, the first transaction information sent by the server; or
a third receiving module 14013, configured to receive third transaction information sent by the first participant, where the third transaction information includes third data, and the third data corresponds to the first participant;
a determining module 14014, configured to determine a transaction ID of the first transaction information based on the third transaction information; and
a fourth receiving module 14015, configured to receive, from the blockchain based on the transaction ID, the first transaction information sent by the server.

In this embodiment, two manners that the first participant sends the transaction ID of the first transaction to the target device and the first participant sends, to the target device, the third transaction information related to the first transaction information are provided, so that the target device can obtain the first transaction information from the blockchain. This increases diversity of solution implementation.

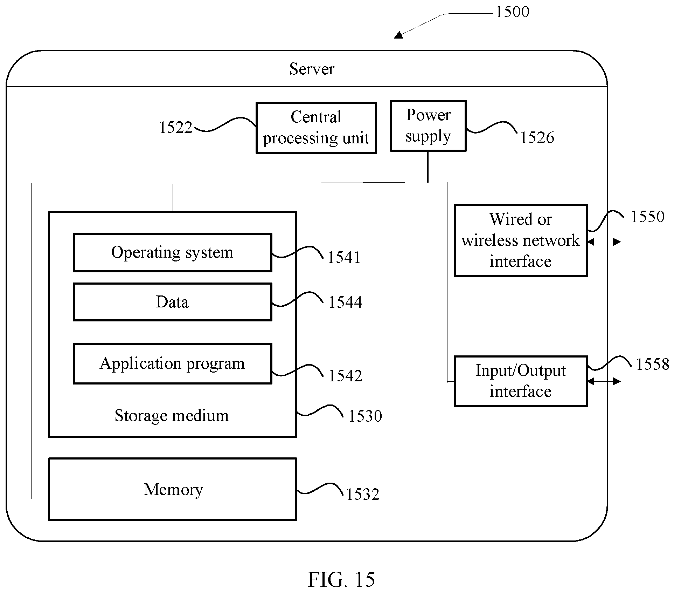

FIG. 15 is a schematic structural diagram of a server according to an embodiment of this application. The server 1500 may vary relatively greatly depending on configuration or performance, and may include one or more central processing units (central processing units, CPU) 1522 (for example, one or more processors) and memories 1532, and one or more storage media 1530 (for example, one or more storage devices) for storing an application program 1542 or data 1544. The memory 1532 and the storage medium 1530 may be ephemeral storage or persistent storage. A program stored in the storage medium 1530 may include one or more modules (not shown in the figure), and each module may include a series of operation instructions for the server. Further, the central processing unit 1522 may be configured to communicate with the storage medium 1530. The series of operation instructions in the storage medium 1530 are executed on the server 1500.

The central processing unit 1522 may perform the following steps based on operation instructions:
generating first transaction information, where the first transaction information is used to indicate that a first participant has obtained control permission, the first transaction information includes information about the first participant and first data that includes information about a second participant, and the control permission is permission to control a target device;
sending the first transaction information to a blockchain;
when the control permission is revoked, generating second transaction information, where the second transaction information includes second data, and there is a correspondence between the second data and the first data; and
sending the second transaction information to the blockchain, where the second transaction information is used to indicate that the control permission on the target device has been revoked, and that the control permission has been revoked is used to instruct the target device to reject control over the target device by the first participant.

The server 1500 may further include one or more power supplies 1526, one or more wired or wireless network interfaces 1550, one or more input/output interfaces 1558, and/or one or more operating systems 1541, for example, Windows ServerTM, Mac OS XTM, UnixTM, LinuxTM, and FreeBSDTM.

Steps performed by the server in the foregoing embodiments may be based on a server structure shown in FIG. 15.

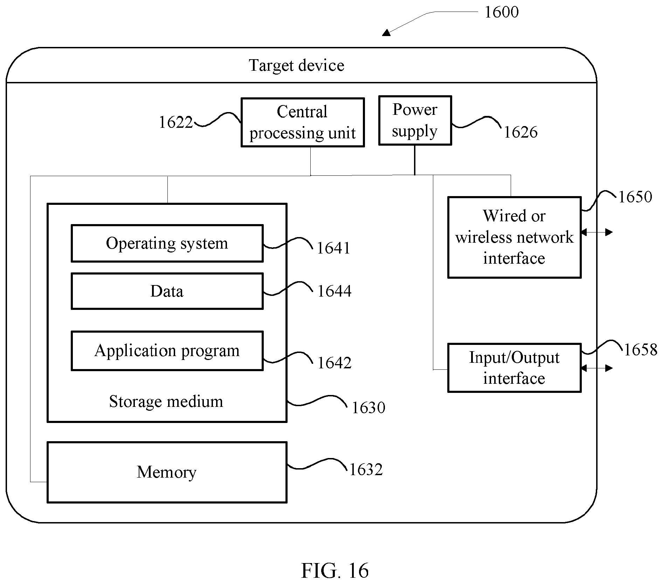

FIG. 16 is a schematic structural diagram of a target device according to an embodiment of this application. The target device 1600 may vary relatively greatly depending on configuration or performance, and may include one or more central processing units (central processing units, CPU) 1622 (for example, one or more processors) and memories 1632, and one or more storage media 1630 (for example, one or more storage devices) for storing an application program 1642 or data 1644. The memory 1632 and the storage medium 1630 may be ephemeral storage or persistent storage. A program stored in the storage medium 1630 may include one or more modules (not shown in the figure), and each module may include a series of operation instructions for the target device. Further, the central processing unit 1622 may be configured to communicate with the storage medium 1630. The series of operation instructions in the storage medium 1630 are executed on the target device 1600.

The central processing unit 1622 may perform the following steps based on the operation instructions:
when detecting second transaction information in a blockchain, determining, based on the second transaction information, that control permission has been revoked, where the second transaction information includes first data, and the first data corresponds to a second participant;
when detecting second transaction information in a blockchain, determining, based on the second transaction information, that control permission has been revoked, where the second transaction information includes second data, there is a correspondence between the second data and first data that includes information about a second participant, and the control permission is permission to control the target device;
determining a first participant in first transaction information obtained from the blockchain, where the first transaction information includes the first data and information about the first participant, the first transaction information is used to indicate that the first participant has obtained the control permission, and the first transaction information is generated by the server; and
rejecting control over the target device by the first participant.

The target device 1600 may further include one or more power supplies 1626, one or more wired or wireless network interfaces 1650, one or more input/output interfaces 1658, and/or one or more operating systems 1641, for example, Windows ServerTM, Mac OS XTM, UnixTM, LinuxTM, and FreeBSDTM.

Steps performed by the target device in the foregoing embodiments may be based on a target device structure shown in FIG. 16.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in a form of a software product. The computer software product is stored in a storage medium and includes instructions for instructing a computer device (which may be a personal computer, a local client, a network device, or the like) to perform all or some of the steps of the methods in the embodiments in FIG. 1 and FIG. 3 to FIG. 8 in this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

## Claims

1. A device control method, comprising:
sending, by a user device of a first participant, a first message to a server;
determining, by the server, authorization information based on the first message;
generating, by the server, a first transaction information based on the authorization information;
sending, by the server, the first transaction information to a blockchain;
receiving, by a target device from the blockchain, the first transaction information sent by the server;
verifying, by the target device, control permission based on the first transaction information, wherein the control permission is permission to control the target device;
determining, by the target device, that verifying the control permission succeeds;
accepting, by the target device, control over the target device by the first participant; and
when the target device detects second transaction information in the blockchain, determining, by the target device based on the second transaction information, that control permission has been revoked, wherein the second transaction information comprises second data, there is a correspondence between the second data and first data that comprises information about a second participant;
determining, by the target device, the first participant in the first transaction information obtained from the blockchain, wherein the first transaction information comprises the first data and information about the first participant, the first transaction information is used to indicate that the first participant has obtained the control permission, and the first transaction information is generated by the server; and
rejecting, by the target device, control over the target device by the first participant.

2. The method according to claim 1, wherein after the accepting, by the target device, control over the target device by the first participant, and before the determining, by the target device based on the second transaction information, that control permission has been revoked, the method further comprises:
periodically checking, by the target device, whether the second transaction exists in the blockchain; and
if the second transaction exists in the blockchain, performing, by the target device, a step to be performed when the second transaction information is detected.

3. The method according to claim 1 or 2, wherein the receiving, by the target device from the blockchain, the first transaction information sent by the server comprises:
receiving, by the target device, a transaction ID, of the first transaction information, sent by the first participant; and
receiving, by the target device from the blockchain based on the transaction ID, the first transaction information sent by the server; or
receiving, by the target device, third transaction information sent by the first participant, wherein the third transaction information comprises third data, and the third data corresponds to the first participant;
determining, by the target device, a transaction ID of the first transaction information based on the third transaction information; and
receiving, by the target device from the blockchain based on the transaction ID, the first transaction information sent by the server.

4. A target device, comprising:
a receiving unit, configured to receive, from a blockchain, first transaction information sent by a server;
wherein the first transaction information is based on authorization information, which in turn is based on a first message received by the server from a user device of a first participant;
a verification unit, configured to verify the control permission based on the first transaction information;
a second determining unit, configured to determine that verifying the control permission succeeds, wherein the control permission is permission to control the target device;
a control accepting unit, configured to accept control over the target device by the first participant;
a first detection unit, configured to: when detecting second transaction information in the blockchain, determine, based on the second transaction information, that control permission has been revoked, wherein the second transaction information comprises second data, there is a correspondence between the second data and first data that comprises information about a second participant;
a first determining unit, configured to determine the first participant in first transaction information obtained from the blockchain, wherein the first transaction information comprises the first data and information about the first participant, the first transaction information is used to indicate that the first participant has obtained the control permission, and the first transaction information is generated by the server; and
a control rejection unit, configured to reject control over the target device by the first participant.

5. The target device according to claim 4, wherein the target device further comprises:
a second detection unit, configured to periodically check whether the second transaction exists in the blockchain; and
an execution unit, configured to: if the second transaction exists in the blockchain, perform a step to be performed when the second transaction information is detected.

6. The target device according to claim 4 or 5, wherein the receiving unit comprises:
a first receiving module, configured to receive a transaction ID, of the first transaction information, sent by the first participant; and
a second receiving module, configured to receive, from the blockchain based on the transaction ID, the first transaction information sent by the server; or
a third receiving module, configured to receive third transaction information sent by the first participant, wherein the third transaction information comprises third data, and the third data corresponds to the first participant;
a determining module, configured to determine a transaction ID of the first transaction information based on the third transaction information; and
a fourth receiving module, configured to receive, from the blockchain based on the transaction ID, the first transaction information sent by the server.

7. A computer-readable storage medium, comprising instructions wherein when the instructions are run on a computer, the computer carries out the steps performed by the target device in claims 1 to 3.

8. A computer program product comprising instructions wherein when the computer program product is run on a computer, the computer carries out the steps performed by the target device in claims 1 to 3.

## Patentansprüche

1. Vorrichtungssteuerungsverfahren, umfassend:
Senden, durch eine Benutzervorrichtung eines ersten Teilnehmers, einer ersten Nachricht an einen Server;
Bestimmen, durch den Server, von Autorisierungsinformationen basierend auf der ersten Nachricht;
Generieren, durch den Server, von ersten Transaktionsinformationen basierend auf den Autorisierungsinformationen;
Senden, durch den Server, der ersten Transaktionsinformationen an eine Blockchain;
Empfangen, durch eine Zielvorrichtung von der Blockchain, der ersten Transaktionsinformationen, die durch den Server gesendet werden;
Verifizieren, durch die Zielvorrichtung, einer Steuerungsberechtigung basierend auf den ersten Transaktionsinformationen, wobei es sich bei der Steuerungsberechtigung um eine Berechtigung zum Steuern der Zielvorrichtung handelt;
Bestimmen, durch die Zielvorrichtung, dass das Verifizieren der Steuerungsberechtigung erfolgreich war;
Annehmen, durch die Zielvorrichtung, der Steuerung über die Zielvorrichtung durch den ersten Teilnehmer; und
wenn die Zielvorrichtung zweite Transaktionsinformationen in der Blockchain detektiert, Bestimmen, durch die Zielvorrichtung basierend auf den zweiten Transaktionsinformationen, dass die Steuerungsberechtigung widerrufen wurde, wobei die zweiten Transaktionsinformationen zweite Daten umfassen und eine Entsprechung zwischen den zweiten Daten und den ersten Daten besteht, die Informationen über einen zweiten Teilnehmer umfasst;
Bestimmen, durch die Zielvorrichtung, des ersten Teilnehmers in den ersten Transaktionsinformationen, die von der Blockchain erlangt werden, wobei die ersten Transaktionsinformationen die ersten Daten und Informationen über den ersten Teilnehmer umfassen, die ersten Transaktionsinformationen verwendet werden, um anzugeben, dass der erste Teilnehmer die Steuerungsberechtigung erlangt hat, und die ersten Transaktionsinformationen durch den Server generiert werden; und
Ablehnen, durch die Zielvorrichtung, der Steuerung über die Zielvorrichtung durch den ersten Teilnehmer.

2. Verfahren nach Anspruch 1, wobei das Verfahren nach dem Annehmen, durch die Zielvorrichtung, der Steuerung über die Zielvorrichtung durch den ersten Teilnehmer und vor dem Bestimmen, durch die Zielvorrichtung basierend auf den zweiten Transaktionsinformationen, dass die Steuerungsberechtigung widerrufen wurde, ferner Folgendes umfasst:
periodisches Überprüfen, durch die Zielvorrichtung, ob die zweite Transaktion in der Blockchain vorhanden ist; und
wenn die zweite Transaktion in der Blockchain vorhanden ist, Durchführen, durch die Zielvorrichtung, eines Schritts, der durchzuführen ist, wenn die zweiten Transaktionsinformationen detektiert werden.

3. Verfahren nach Anspruch 1 oder 2, wobei das Empfangen, durch die Zielvorrichtung von der Blockchain, der ersten Transaktionsinformationen, die durch den Server gesendet werden, Folgendes umfasst:
Empfangen, durch die Zielvorrichtung, einer Transaktions-ID der ersten Transaktionsinformationen, die durch den ersten Teilnehmer gesendet wird; und
Empfangen, durch die Zielvorrichtung von der Blockchain basierend auf der Transaktions-ID, der ersten Transaktionsinformationen, die durch den Server gesendet werden; oder
Empfangen, durch die Zielvorrichtung, von dritten Transaktionsinformationen, die durch den ersten Teilnehmer gesendet werden, wobei die dritten Transaktionsinformationen dritte Daten umfassen und die dritten Daten dem ersten Teilnehmer entsprechen;
Bestimmen, durch die Zielvorrichtung, einer Transaktions-ID der ersten Transaktionsinformationen basierend auf den dritten Transaktionsinformationen; und
Empfangen, durch die Zielvorrichtung von der Blockchain basierend auf der Transaktions-ID, der ersten Transaktionsinformationen, die durch den Server gesendet werden.

4. Zielvorrichtung, umfassend:
eine Empfangseinheit, die dazu konfiguriert ist, von einer Blockchain erste Transaktionsinformationen, die durch einen Server gesendet werden, zu empfangen;
wobei die ersten Transaktionsinformationen auf Autorisierungsinformationen basieren, die wiederum auf einer ersten Nachricht basieren, welche durch den Server von einer Benutzervorrichtung eines ersten Teilnehmers empfangen wird;
eine Verifizierungseinheit, die dazu konfiguriert ist, die Steuerungsberechtigung basierend auf den ersten Transaktionsinformationen zu verifizieren;
eine zweite Bestimmungseinheit, die dazu konfiguriert ist, zu bestimmen, dass das Verifizieren der Steuerungsberechtigung erfolgreich war, wobei es sich bei der Steuerungsberechtigung um eine Berechtigung zum Steuern der Zielvorrichtung handelt;
eine Steuerungsannahmeeinheit, die dazu konfiguriert ist, die Steuerung über die Zielvorrichtung durch den ersten Teilnehmer anzunehmen;
eine erste Detektionseinheit, die zu Folgendem konfiguriert ist:
wenn zweite Transaktionsinformationen in der Blockchain detektiert werden, Bestimmen, basierend auf den zweiten Transaktionsinformationen, dass die Steuerungsberechtigung widerrufen wurde, wobei die zweiten Transaktionsinformationen zweite Daten umfassen und eine Entsprechung zwischen den zweiten Daten und den ersten Daten besteht, die Informationen über einen zweiten Teilnehmer umfasst;
eine erste Bestimmungseinheit, die dazu konfiguriert ist, den ersten Teilnehmer in den ersten Transaktionsinformationen, die von der Blockchain erlangt werden, zu bestimmen, wobei die ersten Transaktionsinformationen die ersten Daten und Informationen über den ersten Teilnehmer umfassen, die ersten Transaktionsinformationen verwendet werden, um anzugeben, dass der erste Teilnehmer die Steuerungsberechtigung erlangt hat, und die ersten Transaktionsinformationen durch den Server generiert werden; und
eine Steuerungsablehnungseinheit, die dazu konfiguriert ist, die Steuerung über die Zielvorrichtung durch den ersten Teilnehmer abzulehnen.

5. Zielvorrichtung nach Anspruch 4, wobei die Zielvorrichtung ferner Folgendes umfasst:
eine zweite Detektionseinheit, die dazu konfiguriert ist, periodisch zu überprüfen, ob die zweite Transaktion in der Blockchain vorhanden ist; und
eine Ausführungseinheit, die zu Folgendem konfiguriert ist: wenn die zweite Transaktion in der Blockchain vorhanden ist, Durchführen eines Schritts, der durchzuführen ist, wenn die zweiten Transaktionsinformationen detektiert werden.

6. Zielvorrichtung nach Anspruch 4 oder 5, wobei die Empfangseinheit Folgendes umfasst:
ein erstes Empfangsmodul, das dazu konfiguriert ist, eine Transaktions-ID der ersten Transaktionsinformationen zu empfangen, die durch den ersten Teilnehmer gesendet wird; und
ein zweites Empfangsmodul, das dazu konfiguriert ist, von der Blockchain basierend auf der Transaktions-ID die ersten Transaktionsinformationen zu empfangen, die durch den Server gesendet werden; oder
ein drittes Empfangsmodul, das dazu konfiguriert ist, dritte Transaktionsinformationen zu empfangen, die durch den ersten Teilnehmer gesendet werden, wobei die dritten Transaktionsinformationen dritte Daten umfassen und die dritten Daten dem ersten Teilnehmer entsprechen;
ein Bestimmungsmodul, das dazu konfiguriert ist, eine Transaktions-ID der ersten Transaktionsinformationen basierend auf den dritten Transaktionsinformationen zu bestimmen; und
ein viertes Empfangsmodul, das dazu konfiguriert ist, von der Blockchain basierend auf der Transaktions-ID die ersten Transaktionsinformationen zu empfangen, die durch den Server gesendet werden.

7. Computerlesbares Speichermedium, umfassend Anweisungen, wobei, wenn die Anweisungen auf einem Computer ausgeführt werden, der Computer die Schritte ausführt, die durch die Zielvorrichtung in Anspruch 1 bis 3 durchgeführt werden.

8. Computerprogrammprodukt, umfassend Anweisungen, wobei, wenn das Computerprogrammprodukt auf einem Computer ausgeführt wird, der Computer die Schritte ausführt, die durch die Zielvorrichtung in Anspruch 1 bis 3 durchgeführt werden.

## Revendications

1. Procédé de commande de dispositif, comprenant :
l'envoi, par un dispositif utilisateur d'un premier participant, d'un premier message à un serveur ;
la détermination, par le serveur, d'informations d'autorisation sur la base du premier message ;
la génération, par le serveur, d'une première information de transaction sur la base des informations d'autorisation ;
l'envoi, par le serveur, des premières informations de transaction à une chaine de blocs ;
la réception, par un dispositif cible de la chaine de blocs, des premières informations de transaction envoyées par le serveur ;
la vérification, par le dispositif cible, de l'autorisation de commande sur la base des premières informations de transaction, dans lequel l'autorisation de commande est l'autorisation de commander le dispositif cible ;
le fait de déterminer, par le dispositif cible, que la vérification de l'autorisation de commande réussit ;
le fait d'accepter, par le dispositif cible, la commande du dispositif cible par le premier participant ; et
lorsque le dispositif cible détecte des deuxièmes informations de transaction dans la chaine de blocs, la détermination, par le dispositif cible sur la base des deuxièmes informations de transaction, que l'autorisation de commande a été révoquée, dans lequel les deuxièmes informations de transaction comprennent des deuxièmes données, il existe une correspondance entre les deuxièmes données et les premières données qui comprennent des informations sur un second participant ;
la détermination, par le dispositif cible, du premier participant dans les premières informations de transaction obtenues de la chaine de blocs, dans lequel les premières informations de transaction comprennent les premières données et informations sur le premier participant, les premières informations de transaction sont utilisées pour indiquer que le premier participant a obtenu l'autorisation de commande, et les premières informations de transaction sont générées par le serveur ; et
le fait de rejeter, par le dispositif cible, la commande du dispositif cible par le premier participant.

2. Procédé selon la revendication 1, dans lequel après l'acceptation, par le dispositif cible, de la commande du dispositif cible par le premier participant, et avant la détermination, par le dispositif cible sur la base des deuxièmes informations de transaction, que l'autorisation de commande a été révoquée, le procédé comprend également :
le fait de vérifier périodiquement, par le dispositif cible, si la seconde transaction existe dans la chaine de blocs ; et
si la seconde transaction existe dans la chaine de blocs, la réalisation, par le dispositif cible, d'une étape à réaliser lorsque les deuxièmes informations de transaction sont détectées.

3. Procédé selon la revendication 1 ou 2, dans lequel la réception, par le dispositif cible de la chaine de blocs, des premières informations de transaction envoyées par le serveur comprend :
la réception, par le dispositif cible, d'un identifiant de transaction, des premières informations de transaction, envoyées par le premier participant ; et
la réception, par le dispositif cible de la chaine de blocs sur la base de l'identifiant de transaction, des premières informations de transaction envoyées par le serveur ; ou
la réception, par le dispositif cible, de troisièmes informations de transaction envoyées par le premier participant, dans lequel les troisièmes informations de transaction comprennent des troisièmes données, et les troisièmes données correspondent au premier participant ;
la détermination, par le dispositif cible, d'un identifiant de transaction des premières informations de transaction sur la base des troisièmes informations de transaction ; et
la réception, par le dispositif cible de la chaine de blocs sur la base de l'identifiant de transaction, des premières informations de transaction envoyées par le serveur.

4. Dispositif cible, comprenant :
une unité de réception, configurée pour recevoir, d'une chaine de blocs, des premières informations de transaction envoyées par un serveur ;
dans lequel les premières informations de transaction sont basées sur des informations d'autorisation, qui à leur tour sont basées sur un premier message reçu par le serveur d'un dispositif utilisateur d'un premier participant ;
une unité de vérification, configurée pour vérifier l'autorisation de commande sur la base des premières informations de transaction ;
une seconde unité de détermination, configurée pour déterminer que la vérification de l'autorisation de commande réussit, dans lequel l'autorisation de commande est l'autorisation de commander le dispositif cible ;
une unité d'acceptation de commande, configurée pour accepter la commande du dispositif cible par le premier participant ;
une première unité de détection, configurée pour : lors de la détection de deuxièmes informations de transaction dans la chaine de blocs, déterminer, sur la base des deuxièmes informations de transaction, que l'autorisation de commande a été révoquée, dans lequel les deuxièmes informations de transaction comprennent des deuxièmes données, il existe une correspondance entre les deuxièmes données et les premières données qui comprennent des informations sur un second participant ;
une première unité de détermination, configurée pour déterminer le premier participant dans des premières informations de transaction obtenues de la chaine de blocs, dans lequel les premières informations de transaction comprennent les premières données et informations sur le premier participant, les premières informations de transaction sont utilisées pour indiquer que le premier participant a obtenu l'autorisation de commande, et les premières informations de transaction sont générées par le serveur ; et
une unité de rejet de commande, configurée pour rejeter la commande du dispositif cible par le premier participant.

5. Dispositif cible selon la revendication 4, dans lequel le dispositif cible comprend également :
une seconde unité de détection, configurée pour vérifier périodiquement si la seconde transaction existe dans la chaine de blocs ; et
une unité d'exécution, configurée pour : si la seconde transaction existe dans la chaine de blocs, réaliser une étape à réaliser lorsque les deuxièmes informations de transaction sont détectées.

6. Dispositif cible selon la revendication 4 ou 5, dans lequel l'unité de réception comprend :
un premier module de réception, configuré pour recevoir un identifiant de transaction, des premières informations de transaction, envoyées par le premier participant ; et
un deuxième module de réception, configuré pour recevoir, de la chaine de blocs sur la base de l'identifiant de transaction, les premières informations de transaction envoyées par le serveur ; ou
un troisième module de réception, configuré pour recevoir des troisièmes informations de transaction envoyées par le premier participant, dans lequel les troisièmes informations de transaction comprennent des troisièmes données, et les troisièmes données correspondent au premier participant ;
un module de détermination, configuré pour déterminer un identifiant de transaction des premières informations de transaction sur la base des troisièmes informations de transaction ; et
un quatrième module de réception, configuré pour recevoir, de la chaine de blocs sur la base de l'identifiant de transaction, les premières informations de transaction envoyées par le serveur.

7. Support de stockage lisible par ordinateur, comprenant des instructions, dans lequel, lorsque les instructions sont exécutées sur un ordinateur, l'ordinateur met en œuvre les étapes réalisées par le dispositif cible selon les revendications 1 à 3.

8. Produit de programme informatique comprenant des instructions, dans lequel, lorsque le produit de programme informatique est exécuté sur un ordinateur, l'ordinateur met en œuvre les étapes réalisées par le dispositif cible selon les revendications 1 à 3.
